# EUROPEAN PATENT SPECIFICATION

(11) **EP 1 785 664 B1**
(45) Date of publication and mention of the grant of the patent: **09.01.2013**
(21) Application number: 06123649.3
(22) Date of filing: 08.11.2006
(51) Int. Cl.: F17C 13/00, B65D 88/00, B65D 90/00, G01M 3/04

(54) **Method and system for leak test of LNG tank by filling water**
Verfahren und Vorrichtung zur Leckprüfung eines Tanks für verflüssigtes Erdgas, durch Füllen mit Wasser
Méthode et appareil pour tester les fuites sur un réseroir pour GNL, par remplissage avec de l'eau

(30) Priority: 11.11.2005 JP 2005327107
(43) Date of publication of application: 16.05.2007
(73) Proprietor: MITSUBISHI HEAVY INDUSTRIES, LTD., Tokyo 108-8215 (JP)
(72) Inventor: Kawahara, Yuzo c/o MITSUBISHI HEAVY IND., LTD., Kanazawa-ku YOKOHAMA Kanagawa (JP); Umehara, Yoshiro c/o MITSUBISHI HEAVY IND., LTD., Naka-ku YOKOHAMA Kanagawa (JP); Makabe, Tomoo c/o MITSUBISHI HEAVY INDUSTRIES, LTD, Naka-ku YOKOHAMA Kanagawa (JP); Kikuchi, Kotaro c/o MITSUBISHI HEAVY IND., LTD., Naka-ku YOKOHAMA Kanagawa (JP)
(74) Representative: Jorio, Paolo

(56) References cited:
- DE-A1- 2 750 978
- FR-A- 1 491 162
- JP-A- 8 193 909
- JP-A- 57 004 532
- JP-A- 58 050 444
- US-A- 3 813 002
- US-A- 5 313 822

## Description

### BACKGROUND OF THE INVENTION

### 1. Technical Field

The present invention relates to a method and system for a leak test of an LNG tank by filling water, an LNG tank, and a method of constructing an LNG tank.

### 2. Background Art

An LNG tank is mainly made up of an inner tank for storing LNG, a cold insulating wall, and an outer tank. The inner tank that is in contact with very low-temperature LNG is generally manufactured by welding a 9%-Ni steel plate of low thermal expansion with a Ni-base welding material. When the LNG tank is completed, it is necessary to conduct a leak test by introducing and holding water in the inner tank to verify the pressure tightness of the inner tank. In this leak test by filling water, pure water such as industrial water or fresh water has conventionally been used to avoid corrosion of the inner tank. However, in regions where it is difficult to obtain pure water, such as Central and South America, Africa, and the Near and Middle East, a large amount of fresh water must be purchased, so that the leak test by filling water entails a very high cost.

To solve this problem, a leak test of LNG tank by filling water performed by using water capable of being obtained at a relatively low cost, such as sea water or filthy water, is conceivable. However, such a kind of water corrodes the inner tank because of its corrosive behavior, so that it is necessary to take measures against corrosion. As a method for corrosion prevention of underwater and offshore structures, a cathode corrosion prevention method can be used in which corrosion is prevented by reducing the corrosion potential to a value lower than the protective potential in the service environment. The cathode corrosion prevention method is broadly divided into a sacrificial anode system and an external power source system.

The sacrificial anode system is a method in which in the case where corrosion of a steel material is prevented, zinc (Zn), aluminum (Al), or an alloy of these metals is connected as a sacrificial electrode, and the potential is reduced to a value lower than the protective potential of steel (about -1000 mV), thereby preventing corrosion. The external power source system is a method in which the potential is reduced to a value lower than the protective potential by causing a d.c. current to flow between the electrodes, thereby preventing corrosion.

However, if the sacrificial anode system is employed for the leak test by filling water, a consumable electrode such as Zn dissolves in water in large amounts, and hence the concentration of Zn in water becomes 10 to 50 ppm, for example. Therefore, there arises a problem in that the water quality of effluent exceeds the standard value, and a high cost is required to treat the discharged water. Also, for both of the sacrificial anode system and the external power source system, it is difficult, in principle, to limitedly prevent corrosion of only a different material weld zone, so that there arise a problem in that galvanic corrosion cannot be prevented completely and a problem in that over-prevention of corrosion promotes the generation of hydrogen and the generation of alkali (OH⁻), which may cause paint blister and stress corrosion cracking (SCC). Anyway, it is difficult to completely prevent corrosion of only the weld zone limitedly. Further, the sacrificial anode system requires increased appurtenant work, and thus is unsuitable for on-site work at the construction site of LNG tank. The external power source system entails very high cost including equipment costs.

On the other hand, unlike LNG, LPG contains water and H₂S in minute amounts. Therefore, during the time when LPG is stored, there arises a problem in that stress corrosion cracking (SCC) occurs in the LPG tank due to the contained water. As a method of preventing the stress corrosion cracking, Japanese Patent Publication No. 4-18185 (No. 18185/1992) has disclosed a technique in which the weld zone of LNG tank and the inner surface region near the weld zone are surface prepared, and a zinc-rich paint is applied to this region. [Patent Document 1] Japanese Patent Publication No. 4-18185 (No. 18185/1992).

Closest prior art JP57004532 discloses a method for carrying out a leak test with sea water, the method being aimed at shutting off weld part from water in order to prevent corrosion. In particular, JP57004532 teaches applying a corrosion-preventing tape over the weld parts, said tape being in turn secured with portions of double-coated tape all around; a layer of vinyl coating being finally applied all over.

### SUMMARY OF THE INVENTION

The present invention has been made to solve the above problems, and accordingly an object thereof is to provide a method and system for a leak test of an LNG tank by filling water, in which corrosion can be prevented even if corrosive water such as sea water or filthy water is used, and the dissolution of zinc in water and environmental pollution caused by the dissolution can also be restrained, an LNG tank subjected to such a leak test, and a method of constructing an LNG tank.

To achieve the above object, a method for a leak test of an LNG tank by filling water in accordance with the present invention is characterized by including the steps of applying a zinc-containing paint on the surface of a weld zone of the inner wall of the LNG tank; introducing corrosive water including sea water or filthy water in a state in which the zinc-containing paint forms the surface of the weld zone; filling the corrosive water into the LNG tank, and discharging the corrosive water from the LNG tank after a predetermined period of time has elapsed; and subsequently detecting a flaw in the inner wall of the LNG tank.

By directly applying the zinc-containing paint to the weld zone of the LNG tank in this manner, even when corrosive water is used for the leak test, local corrosion of the weld zone can be prevented, and also the zinc dissolution amount in the leak test can be kept at an amount smaller than 1 ppm. Therefore, the equipment cost and work cost required for corrosion prevention in the leak test can be reduced significantly.

As another mode, a method for a leak test of an LNG tank by filling water in accordance with the present invention is characterized by including the steps of affixing a tape having a zinc-containing layer on the surface thereof to the surface of a weld zone of the inner wall of the LNG tank; introducing corrosive water including sea water or filthy water in a state in which the zinc-containing layer forms the surface of the weld zone; filling the corrosive water into the LNG tank, and discharging the corrosive water from the LNG tank after a predetermined period of time has elapsed; and detecting a flaw in the inner wall of the LNG tank after the tape has been taken off from the weld zone.

By affixing the tape having the zinc-containing layer on the surface thereof to the weld zone of the inner wall of the LNG tank, even when corrosive water is used for the leak test, local corrosion of the weld zone can be prevented, and also the zinc dissolution amount in the leak test can be kept at an amount smaller than 1 ppm. Also, even in the case where the weld zone subjected to corrosion preventive treatment must be inspected after water has been drained from the tank, the zinc-containing layer can be removed merely by taking the tape off, so that the weld zone can be inspected easily. Therefore, the equipment cost and work cost required for corrosion prevention in the leak test can be reduced significantly.

In the method for a leak test of an LNG tank by filling water in accordance with the present invention, it is preferable that by combining the above-described modes, the tape having the zinc-containing layer on the surface thereof be affixed to the surface of the weld zone of the inner wall on the bottom surface of the LNG tank, and the zinc-containing paint be applied to the surface of the weld zone of the inner wall on the side surface of the LNG tank. Since the bottom portion of the tank is deformed greatly by the pressure, this portion must be inspected after water has been drained. Therefore, by preventing the corrosion of the weld zone in the tank bottom portion by using the tape, the weld zone in the bottom portion can be inspected easily by taking the tape off after water drainage. On the other hand, since the side surface of the tank need not be inspected after water drainage, LNG can be poured in the state in which the zinc-containing paint has been applied without being removed.

In the method for a leak test of an LNG tank by filling water in accordance with the present invention, it is preferable that the corrosive water be introduced into the LNG tank so that the flow velocity of the corrosive water in the LNG tank is 3 m/s or lower. By restricting the flow velocity in this manner, the dissolution of zinc from the zinc-containing paint can be restrained surely. Also, it is preferable that the inner wall of the LNG tank be washed by water after the corrosive water has been discharged from the LNG tank.

As another aspect, a system for a leak test of an LNG tank by filling water in accordance with the present invention is characterized by including a water supply line for introducing corrosive water including sea water or filthy water into the LNG tank to carry out the leak test of the LNG tank by filling water; a flow distribution means for making the flow velocity of the corrosive water supplied through the water supply line 3 m/s or lower in the LNG tank; and a water discharge line for discharging the corrosive water in the LNG tank after the leak test has been finished. As the flow distribution means, a branch nozzle, a buffer tank, or the like can be employed. Also, the water supply line and the water discharge line can be provided separately, or can be provided as one water supply/discharge line.

Also, as another aspect, a method of constructing an LNG tank in accordance with the present invention is characterized by including the steps of applying a zinc-containing paint to the surface of a weld zone of the inner wall of the LNG tank; introducing corrosive water including sea water or filthy water in a state in which the zinc-containing paint forms the surface of the weld zone; filling the corrosive water into the LNG tank, and discharging the corrosive water from the LNG tank after a predetermined period of time has elapsed; and detecting a flaw in the inner wall of the LNG tank to carry out a leak test of the LNG tank by filling water.

As another aspect, a method of constructing an LNG tank in accordance with the present invention is characterized by including the steps of affixing a tape having a zinc-containing layer on the surface thereof to the surface of a weld zone of the inner wall of the LNG tank; introducing corrosive water including sea water or filthy water in a state in which the zinc-containing layer forms the surface of the weld zone; filling the corrosive water into the LNG tank, and discharging the corrosive water from the LNG tank after a predetermined period of time has elapsed; and detecting a flaw in the inner wall of the LNG tank after the tape has been taken off from the weld zone to carry out a leak test of the LNG tank by filling water.

As still another aspect, an LNG tank in accordance with the present invention is characterized by being constructed by applying a zinc-containing paint on the surface of a weld zone of the inner wall of the LNG tank; introducing corrosive water including sea water or filthy water in a state in which the zinc-containing paint forms the surface of the weld zone; filling the corrosive water into the LNG tank, and discharging the corrosive water from the LNG tank after a predetermined period of time has elapsed; detecting a flaw in the inner wall of the LNG tank to carry out a leak test of the LNG tank by filling water; and thereafter installing a stainless steel-made member in the tank.

As another aspect, an LNG tank in accordance with the present invention is characterized by being constructed by affixing a tape having a zinc-containing layer on the surface thereof to the surface of a weld zone of an inner wall of the LNG tank; introducing corrosive water including sea water or filthy water in a state in which the zinc-containing layer forms the surface of the weld zone; filling the corrosive water into the LNG tank, and discharging the corrosive water from the LNG tank after a predetermined period of time has elapsed; detecting a flaw in the inner wall of the LNG tank after the tape has been taken off from the weld zone to carry out a leak test of the LNG tank by filling water; and thereafter installing a stainless steel-made member in the tank.

If the stainless steel-made member is installed in the LNG tank before the leak test by filling water, corrosion is accelerated by different metal contact corrosion between the stainless steel and the 9%-Ni steel of inner wall or the applied or affixed zinc. Therefore, there arises a problem in that the zinc consumes early, the zinc dissolution amount increases, or the stainless steel itself is corroded by sea water. To avoid this problem, the stainless steel-made member must be installed after the leak test has been finished.

As described above, according to the present invention, there can be provided a method for a leak test of an LNG tank by filling water, in which corrosion can be prevented even if corrosive water such as sea water or filthy water is used, and the dissolution of zinc in water can also be restrained, an LNG tank, and a method of constructing an LNG tank.

### BRIEF DESCRIPTION OF THE DRAWINGS

Figure 1 is a schematic view showing one embodiment of a system for a leak test of an LNG tank by filling water in accordance with the present invention.
Figure 2 is a sectional view showing a portion around a weld zone on the bottom surface of the LNG tank shown in Figure 1.
Figure 3 is a flowchart showing one embodiment of a method for a leak test of an LNG tank by filling water in accordance with the present invention.
Figure 4 is perspective views showing test specimens used in an example.
Figure 5 is perspective views showing test specimens coated with a zinc-containing paint, which was used in an example.
Figure 6 is a sectional view showing a state in which a test specimen is immersed in sea water in an example.
Figure 7 is a graph showing concentrations of Zn, Fe and SS in immersion water.
Figure 8 is a graph showing concentrations of Zn, Fe and SS in immersion water.
Figure 9 is a graph showing a change in concentration of Zn in effluent in a leak test by filling water.
Figure 10 is a graph showing removed amount of Cl in washing water.
Figure 11 is a graph showing SCC occurrence result in SSRT.

### DETAILED DESCRIPTION OF THE PREFERRED EMBODIMENT

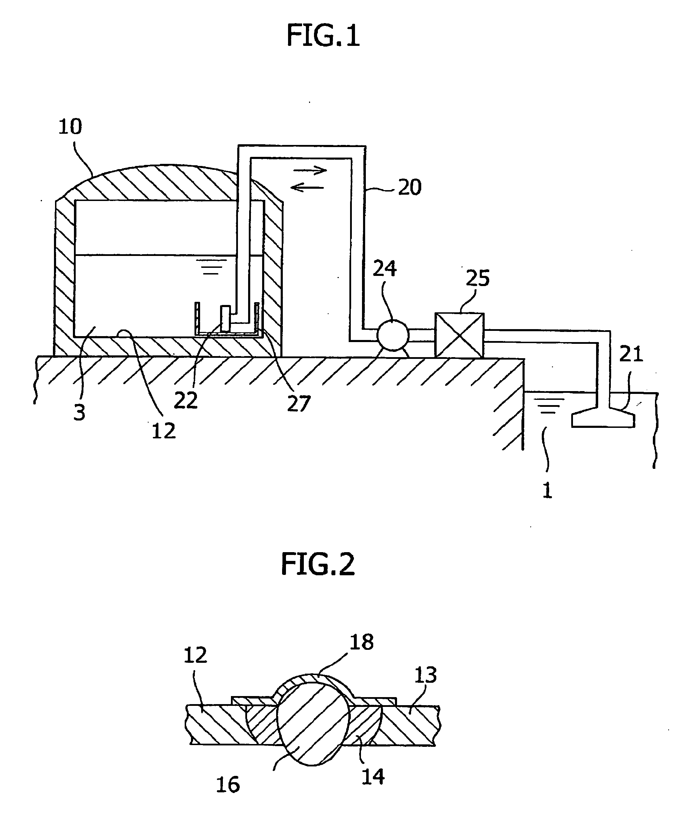

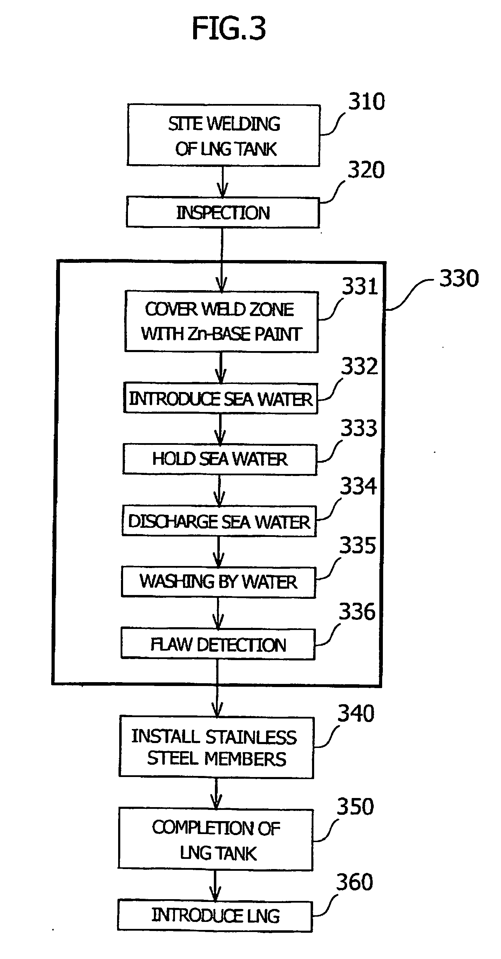

One embodiment of the present invention will now be described with reference to the accompanying drawings. Figure 1 is a schematic view showing one example of a system for leak test of an LNG tank by filling water in accordance with the present invention. Figure 2 is a sectional view showing a portion around a weld zone on the bottom surface of the LNG tank shown in Figure 1. Figure 3 is a flowchart showing one example of a method for leak test of an LNG tank by filling water in accordance with the present invention.

As shown in Figure 1, an LNG tank 10 has been constructed on the ground near the seashore. Inner walls on the bottom surface, side surface, and ceiling surface of LNG tank are formed of a 9%-Ni steel. Also, as a welding material, a Ni-base alloy containing Cr and Mo is used. Also, a Ni steel the surface of which has been coated in advance with a zinc-containing paint can be used. As such a zinc-containing paint, a zinc-rich paint or a zinc-rich primer (for example, specified in JIS K5552) is preferable. Also, the zinc-containing paint is preferably applied so as to have a thickness of 15 to 100 µm.

Also, in order to introduce test water for leak test into the LNG tank 10, a water supply/discharge line 20 is laid from the seashore to the LNG tank 10. A water intake 21 at one end of the water supply/discharge line 20 is disposed in sea water, and a supply port 22 at the other end thereof is disposed in a buffer tank 27 provided on a bottom surface 12 of the LNG tank 10.

The buffer tank 27 is not subject to any special restriction if it can temporarily store the test water (sea water) supplied through the supply port 22 and hence can reduce the flow velocity. For example, as shown in Figure 1, the buffer tank 27 may be a rectangular or cylindrical tank whose upper part is open so that overflowing test water flows out into the LNG tank 10 from the upper part of the buffer tank 27. The material of the buffer tank 27 is preferably a material that does not a potential difference with respect to an inner tank, such as a 9%-Ni steel or a carbon steel. Also, on the water supply/discharge line 20, a pump 24 and a strainer 25 are provided.

The inner wall of the LNG tank 10 is assembled by welding a Ni steel 13 at the construction site (Step 310 in Figure 3). After welding, the tank inner wall is inspected (Step 320 in Figure 3). As shown in Figure 2, Ni-steels 13a and 13b are connected to each other via a weld metal 16. As the weld metal 16, a Ni-base alloy such as a NiMoCr alloy or a NiCr alloy is usually used. However, the weld metal 16 is a metal different from the Ni steel 13, so that when a leak test using corrosive water is carried out, different metal contact corrosion occurs in this weld zone.

Therefore, before the leak test by filling water is conducted (Step 330 in Figure 3), first, the surfaces of the weld metal 16 and a welding heat affected zone (HAZ) 14 around the weld metal 16 are covered with a zinc-containing paint 18 (Step 331 in Figure 3). As the pretreatment before painting, grinding or blasting is preferably performed. As the zinc-containing paint 18 used here, an inorganic zinc-rich paint or an organic zinc-rich paint (for example, specified in JIS K5553) or a zinc-rich primer (for example, specified in JIS K5552) is preferable. By applying the zinc-containing paint 18 with a width of 50 to 200 mm according to the objective weld zone, the HAZ 14 and the weld metal 16 can be covered sufficiently. The layer thickness of the zinc-containing paint 18 is preferably 15 to 100 µm.

Instead of the application of the zinc-containing paint 18 to the surfaces of the weld metal 16 and the HAZ 14, a tape having a zinc-containing layer on the surface thereof may be affixed on the surfaces of the weld metal 16 and the HAZ 14. As the zinc-containing layer, a zinc foil formed by rolling zinc is preferable. The thickness of the zinc-containing layer is preferably 50 to 100 µm. The back surface of tape, which is the adhesive face thereof, is preferably a layer of an adhesive having electric conductivity. Also, the layer of adhesive may contain zinc particles. The tape having the zinc-containing layer on the surface thereof is provided with a release paper on the adhesive face thereof before affixing, and at the time of affixing, this release paper is taken off, and then the tape is affixed.

Next, in the state in which the zinc-containing paint 18 is exposed to the surface, the pump 24 is started to take sea water 1 in through the water intake 21, and the sea water 1 is introduced into the LNG tank 10 as a test water 3 through the water supply/discharge line 20 (Step 332 in Figure 3). Foreign matters such as mud and plankton are removed by the strainer 25. These foreign matters can be removed by providing a settling tank or the like. Also, if the velocity at which the sea water 1 flows into the LNG tank 10 is too high, the dissolution of zinc is promoted. Therefore, the flow velocity of the sea water 1 is preferably controlled so as to be not higher than 3 m/s, preferably not higher than 1 m/s.

The flow velocity of the sea water 1 can be controlled by the pump 24. Also, the supply port 22 is provided in the buffer tank 27 to supply the sea water overflowing from the buffer tank 27 into the LNG tank 10, by which the flow of the sea water 1 is distributed, so that the flow velocity of the sea water 1 can be prevented from exceeding 3 m/s locally (especially, on the surface of a bottom portion 12). Also, in place of the buffer tank 27, a distribution nozzle (not shown) can be installed at the supply port 22.

After the LNG tank 10 has been filled with the test water 3, the pump 24 is stopped, and the test water 3 is held as it is for a predetermined period of time (Step 333 in Figure 3). Subsequently, the pump 24 is started so that, at this time, the test water 3 in the LNG tank 10 flows from the supply port 22 to the water intake 21 through the water supply/discharge line 20, by which the test water 3 is discharged from the LNG tank 10 into the sea (Step 334 in Figure 3). At this time, since the concentration of zinc in the test water 3 is not higher than 1 ppm, the test water 3 can be discharged into the sea without being subjected to special treatment. In order to restrain the dissolution of zinc, the time period taken for the introduction, holding, and discharge (Steps 332 to 334 in Figure 3) should preferably be within one month in total.

All of the test water 3 is discharged from the LNG tank 10, and the interior of the LNG tank 10 is cleaned by water (Step 335 in Figure 3) as necessary. Thereafter, inspection and flaw detection of weld zone of the inner wall of the LNG tank 10 are carried out (Step 336 in Figure 3). In this case, in the case where the weld zone is covered by the method in which the tape having the zinc-containing layer on the surface thereof is affixed, the inspection can be carried out by taking this tape off. The flaw detection is preferably carried out by penetrant testing, vacuum box testing, or the like in addition to the visual test.

After the leak test has been finished as described above, different kinds of members (for example, piping for putting in and taking out LNG and supports) formed of a stainless steel etc. are installed on the inner wall of the LNG tank 10 as necessary (Step 340 in Figure 3). As the stainless steel, SUS304 or 316 is preferable. By installing the stainless steel-made members on the inner wall after the leak test using sea water, the promotion of corrosion of the zinc paint, tape, and base metal caused by the stainless steel-made members themselves and the contact with the different kind of material can be prevented. By the above-described procedure, the LNG tank is completed (Step 350 in Figure 3), and LNG can be introduced into the tank (Step 360 in Figure 3).

As described above, according to this embodiment, even if corrosive water such as sea water is used as the test water 3 in the leak test of the LNG tank 10, portions that may be corroded, such as the weld metal 16 and HAZ 14, can be prevented from corroding by the zinc-containing paint 18 or the tape having the zinc-containing layer on the surface thereof, and also the dissolution of zinc in the test water 3 can be restrained. In particular, the weld metal 16 and the HAZ 14 around the weld metal 16 of the tank bottom surface are covered with the tape having the zinc-containing layer on the surface thereof before the introduction of sea water, and the tape is taken off after the discharge of sea water, by which the tank bottom surface can be inspected easily. In the case where the tank bottom surface need not be inspected, the whole of inner wall of the tank can be covered with the zinc paint.

### EXAMPLE

### Corrosion prevention test using zinc-containing paint and tape having zinc-containing layer on the surface thereof

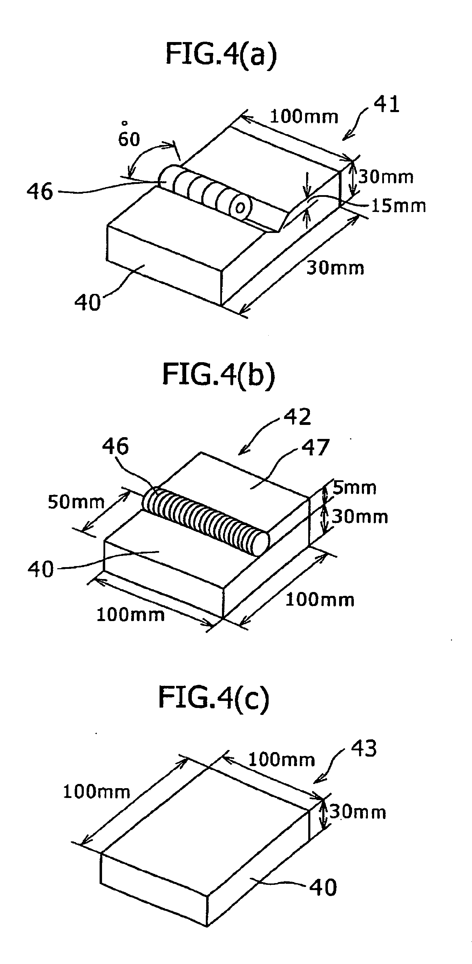

As test specimens, as shown in Figures 4(a) to 4(c), three kinds of specimens were used; namely, a same material welding test specimen 41 in which a weld zone is provided in a central portion of a base metal 40 measuring 100 x 100 x 30 mm, which is formed of a 9%-Ni steel, and butt welding is performed, a different material welding test specimen 42 in which a 5 mm-thick SUS material (SUS304) 47 is lap welded to the base metal 40, and a base metal test specimen 43 consisting of the base metal 40 only. A welding rod 46 used for welding was a NiCr-base welding rod that is used for on-site welding. Also, the surface of test specimen was polished with a grinder.

As the zinc-containing paint, Cerarich DH (manufactured by Dai Nippon Toryo Co., Ltd., Zn content in dried paint film: 45%) of zinc primer, Zettar OL-HB (manufactured by Dai Nippon Toryo Co., Ltd., Zn content on a cured film base: 86%) of inorganic zinc-rich paint, Zettar EP-2HB (manufactured by Dai Nippon Toryo Co., Ltd., Zn content in dried paint film: 85%) of organic zinc-rich paint were used. As the tape having the zinc-containing layer on the surface thereof (hereinafter, abbreviated to the zinc tape), ZAP tape (manufactured by Mitsui Mining & Smelting Co., Ltd., Zn content of the zinc-containing layer: 100%) having a width of 66 mm and a thickness of 0.1 mm was used.

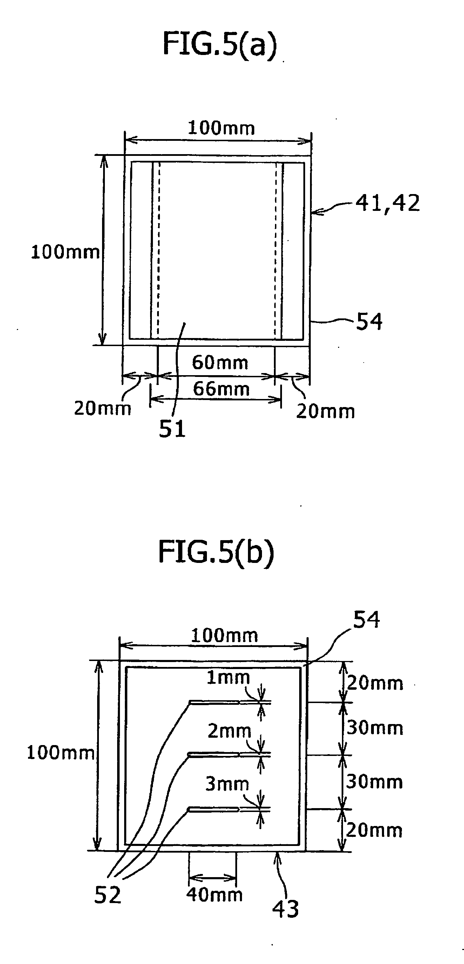

For the same material welding test specimen 41, first, as shown in Figure 5(a), a zinc primer was applied to both ends 20 mm of the base metal surface assuming the zinc-rich shop primer having been applied to the base metal in advance at the factory, and subsequently a zinc-containing paint 51 of the objective zinc primer, inorganic zinc-rich paint, or organic zinc-rich paint was applied to the central weld zone and the HAZ portions (total width of 60 mm). The zinc-containing paint 51 was applied to the central portion of 66 mm so as to overlap with the zinc primer applied portion by 3 mm to prevent the exposure of base metal. The film thickness of zinc primer was 20 µm, the film thickness of inorganic zinc-rich paint was 30 µm, and the film thickness of organic zinc-rich paint was 75 µm.

Also, for the same material welding test specimen 41, the zinc tape was affixed in place of the zinc-containing paint. The zinc tape was affixed to the central portion of 66 mm after the zinc primer had been applied on the base metal surface in the same way as described above. Assuming the occurrence of defects such as unbonded portions at the time when the tape was affixed, the zinc tape was affixed with a clearance being provided partially so that the weld zone and the HAZ portion were exposed. The width of the clearance was set at 5, 15 or 25 mm.

Further, for the different material welding test specimen 42 as well, after the zinc primer had been applied to the base metal surface in the same way as described above, the inorganic zinc-rich paint or the organic zinc-rich paint was applied to the central portion of 66 mm. On the other hand, for the base metal test specimen 43, the whole surface thereof was coated with the zinc primer, inorganic zinc-rich paint, or organic zinc-rich paint. For all of the test specimens, the side surfaces and the back surface were subjected to masking with a tar epoxy paint, and as shown in Figure 5(a), a peripheral portion 54 of the surface (a width of 3 mm from the edge) was covered with a tape to protect this portion.

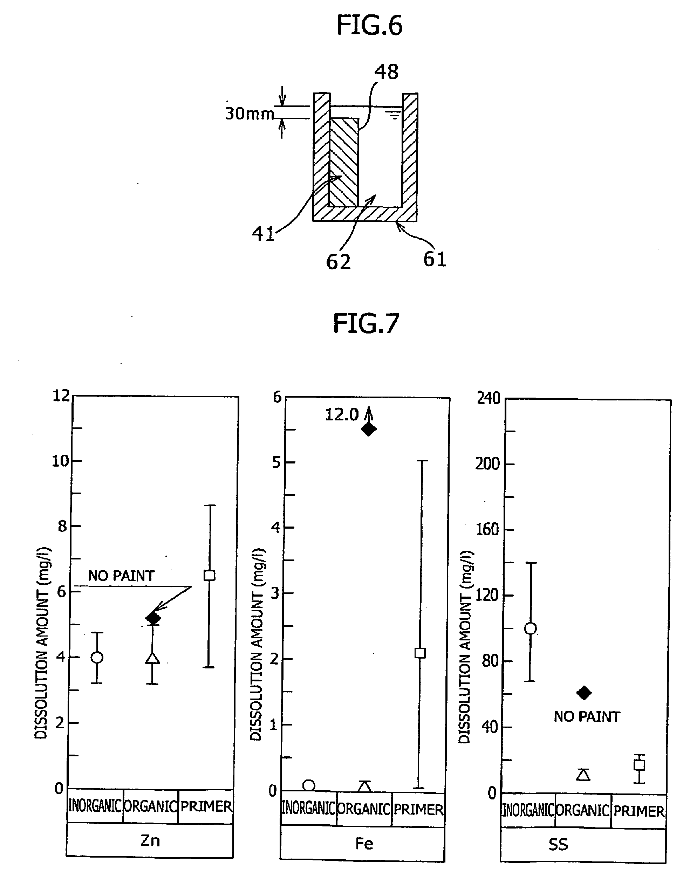

As shown in Figure 6, the test specimen to which the zinc-containing paint was applied or the zinc tape was affixed as described above was placed in a vessel 61 (vessel inside dimensions: 150 x 150 x 50 mm) made of vinyl chloride, and further 380 mL of natural sea water 62 taken from the Bay of Tokyo was filled to cover the whole surface of the test specimen 41 with the sea water 62. The vessel 61 was further put in a large water tank, and the temperature thereof was held at a constant temperature of 30°C, which is the highest temperature assumed in the leak test by filling water. The immersion period was set to three conditions of 3, 14 and 30 days assuming a difference in sea water contacting period between the upper and lower parts of the LNG tank. The test specimen having been immersed was allowed to stand in the indoor atmosphere for about six months (December to May) assuming the standing period of the actual LNG tank (hereinafter referred to as secondary exposure).

The secondary exposure was carried out under the following conditions assuming the actual LNG tank.

### (1) Allowed to stand in a state in which sea water adheres (without washing by water)

### (2) Allowed to stand after washing by water

Also, to check the washing effect of test specimen surface after the leak test by filling sea water, the test specimen was cleaned by using about 100 cc of water per one test specimen under the following conditions that can be applied at the site.

### (b-1) Water injection only

### (b-2) Water injection plus use of toothbrush

On the test specimen subjected to sea water immersion and secondary exposure under the above-described conditions, the change in surface conditions was examined by visual inspection. The results are given in Table 1. For comparison, the same test was also conducted for the case where no zinc-containing paint was applied to the test specimen.

**Table 1**

| Test specimen | Kind of zinc coating | | Immersion period | Surface condition after immersion in sea water | Condition of secondary exposure | Surface condition after secondary exposure |
|---|---|---|---|---|---|---|
| | None | | 3 days | Partial formation of red rust on steel material surface | Water injection | Some increase in rust (6 months) |
| | Inorganic zinc | | | Some discoloration (white and dotted) | | No change (6 months) |
| | Organic zinc | | | - | | Deterioration in paint film after 3 months |
| | Zinc primer | | | - | | |
| | None | | 14 days | Partial formation of red rust on steel material surface | Water injection | Some increase in rust (6 months) |
| Same material welding | Inorganic zinc | | | Formation of white dotted corrosion products | | No change (6 months) |
| | Organic zinc | | | Formation of some white dotted corrosion products | | Deterioration in paint film after 3 months |
| | Zinc primer | | | - | | - |
| | None | | | Formation of red rust on steel material surface | Water injection | Some increase in rust (6 months) |
| | | | | | Water injection plus brush | |
| | | | | | No washing by water | |
| | Inorganic zinc | | | Formation of white dotted Zn rust. No red rust | Water injection | No great change (6 months) |
| | | | | | Water injection plus brush | |
| | | | | | No washing by water | Some increase in white rust (6 months) |
| | Organic zinc | | 30 days | Formation of some white dotted rust. No red rust | Water injection | No great change (6 months). Deterioration in paint film after 3 months |
| | | | | | Water injection plus brush | |
| | | | | | No washing by water | |
| | Zinc primer | | | Formation of some white dotted rust. No red rust | Water injection | No great change (6 months) |
| | | | | | Water injection plus brush | |
| | | | | | No washing by water | Some increase in white rust (6 months) |
| | Zinc tape | Clearance 5mm | | No red rust on base metal. White dotted rust on tape surface | - | - |
| | | Clearance 15mm | | No red rust on base metal. Increase in white dotted rust | | |
| | | Clearance 25mm | | No red rust on base metal. Penetration of dotted rust | | |
| Different material welding | None | | | Formation of red rust on HAZ on the side of 9%-Ni steel | No washing by water | Some increase in red rust (6 months) |
| | Inorganic zinc | | 30 days | Formation of some white rust | | No great change (6 months) |
| | Organic zinc | | | Formation of some white rust | | No great change (6 months). Deterioration in paint film after 3 months |
| No weld | Zinc primer | | | Formation of some dotted white rust. No red rust | No washing by water | No great change (6 months) |
| | Inorganic zinc | | 30 days | Partial formation of white rust. No red rust | | - |
| | Organic zinc | | | Formation of some dotted white rust. No red rust | | Deterioration in paint film after 3 months |

As given in Table 1, on the same material welding test specimen, which was not coated with the zinc-containing paint and immersed in natural sea water for 30 days, the formation of red rust and some decrease in thickness due to corrosion were recognized in the HAZ portion. On the other hand, on the test specimen that was coated with the inorganic zinc-rich paint, organic zinc-rich paint, or zinc primer, no formation of red rust was recognized in the weld zone. The formation of dotted white rust was recognized on the surface of paint. The degree of formation of white rust was high in the order of inorganic zinc-rich paint, organic zinc-rich paint, and zinc primer, showing that for the paint having higher electric anticorrosion effect, the dissolution of Zn and corrosion in sea water were liable to progress. This tendency coincides with the fact that the inorganic zinc has the highest anticorrosion effect even in salt spray and immersion test in an acceleration environment. It was found that if the immersion period is about one month, the organic zinc-rich paint and zinc primer can also be used satisfactorily on the actual LNG tank.

In the case where the zinc tape was used, even if a clearance of 5, 15 or 25 mm was formed, red rust was not formed in the weld zone, apparently showing high anticorrosion effect. Also, as the unbonded portion was larger, the corrosion (consumption) of zinc tape due to positive cathode corrosion prevention was greater. In the case where the clearance was 25 mm, a small through hole was formed, showing the same tendency as that of the increasing dissolution of Zn in the paint.

For the different material welding test specimen, the formation of white rust was recognized on the test specimens coated with the inorganic zinc-rich paint and organic zinc-rich paint; however, the base metal was not corroded. The degree of formation of white rust was higher on the test specimen coated with the inorganic zinc-rich paint.

Regarding the exposure of base metal due to paint application defect on the 9%-Ni steel plate, such as partial separation of paint, portion left unpainted, or blowhole, when the size of exposure is small, the corrosion prevention due to the cathode anticorrosion effect can be anticipated. However, the dissolution of Zn increases, so that work control that does not produce such a defect as far as possible is necessary from the viewpoint of the prevention of environmental pollution.

Also, for the test specimen to which neither zinc-containing paint nor zinc tape was applied, some progress of red rust due to the secondary exposure was recognized regardless of the performance of washing by water after the immersion in sea water. On the other hand, for the test specimen to which the zinc-containing paint was applied, white rust scarcely progressed in the case where the test specimen was washed by water after the immersion in sea water. Therefore, it was found that the progress of corrosion for the standing period can be restrained by performing washing by water after the immersion in sea water. For the washing method, no significant difference was recognized between the method of water injection using a washing bottle and the method in which brushing is performed simultaneously with the water injection.

For the test specimen coated with the zinc-containing paint, remarkable progress of corrosion was not recognized even six months after the second exposure, excluding the case where the test specimen was allowed to stand in a state in which sea water adhered to the specimen. This revealed that by keeping the test specimen in a dried state after washing by water, the anticorrosion effect of zinc-containing paint was also achieved, so that the corrosion of the base metal progressed little. From this fact, it can be thought that it is necessary to take measures for dehumidification depending on the climate situation of the site.

From the above-described test results, it was found that regarding the protection of weld zone, all of the inorganic zinc-rich paint, organic zinc-rich paint, zinc primer, and zinc tape can be used according to the conditions. However, these protection measures must be selected considering the later-described Zn dissolution amount, workability, influence on SC, and the like.

### Measurement of dissolution amount of zinc etc.

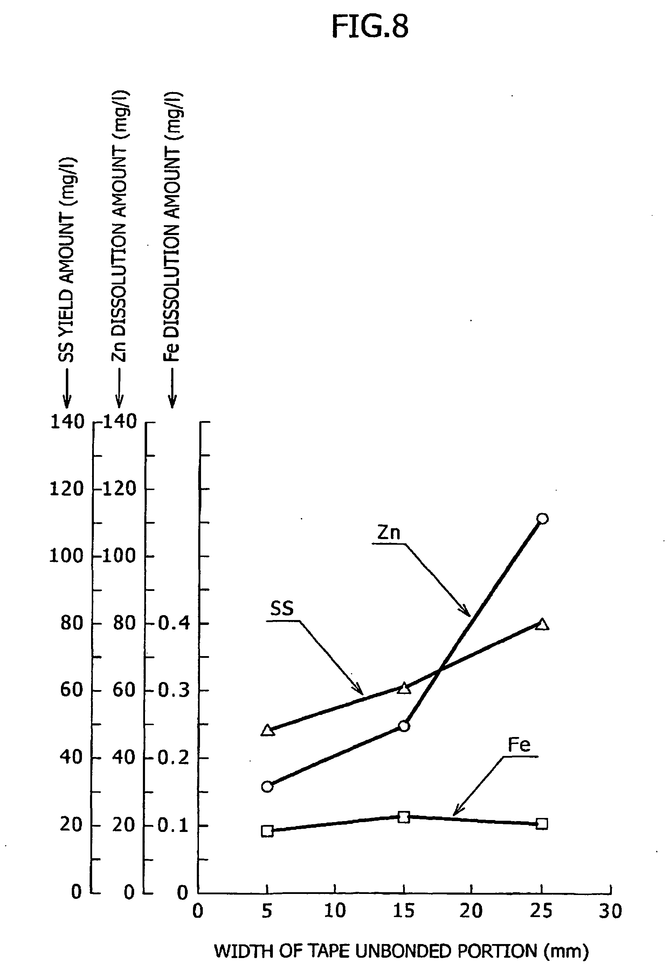

In the above-described corrosion prevention test, the concentration of dissolved Fe and Zn in the immersion water after the test specimen has been immersed for 30 days was analyzed. Also, considering the fact that Zn deposits as sludge such as Zn(OH)₂, the concentration of suspended solid (SS) was also analyzed. The results are shown in Figure 7 for the test specimen coated with the inorganic zinc-rich paint, organic zinc-rich paint, zinc primer, and are shown in Figure 8 for the test specimen to which the zinc tape is affixed.

As shown in Figure 7, the dissolution amount of Zn is large in the order of zinc primer, organic zinc-rich paint, and inorganic zinc-rich paint, which shows a tendency contrary to the anticorrosion effect. This is presumably because the influence of paint properties, especially, a film defect is great. Specifically, it is conceivable that a thin-film primer has many film defects, so that more Zn is consumed for corrosion prevention. Also, from the fact that the amount of dissolved Fe coincides with the dissolution tendency of Zn, too, it is found that the anticorrosion effect of primer is incomplete. However, remarkable red rust is not formed in a short period of 30 days, and the base metal is damaged little, so that it can be thought that sea water can be used for the leak test. The amount of SS exhibits a large value for the inorganic zinc-rich paint. This is possibly caused by much white rust found on the surface after the test. It can be thought that the white rust consists mainly of Zn(OH)₂, Zn(OH)₃, and the like.

It was found that as shown in Figure 8, for the zinc tape, Fe is scarcely dissolved, and the anticorrosion effect is great despite the fact that the unbonded portion is large. On the other hand, it is found that the dissolution amount of Zn increases as the unbonded portion becomes large, and the dissolution of Zn for corrosion prevention increases as described above. From this point of view, even if some degree of film defect exists, the zinc tape having a great cathode anticorrosion effect can maintain the anticorrosion effect, but the pollution risk increases due to the dissolution of Zn. The similar tendency can also be found in the above-described tendency of corrosion and dissolution of zinc-containing paint.

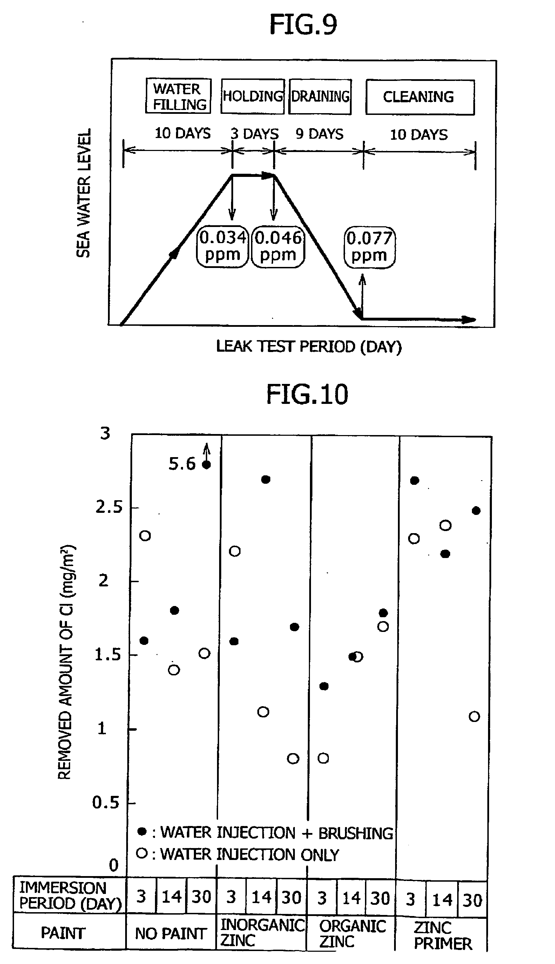

Figure 9 shows the calculation result of the amount of Zn dissolved in discharged sea water in the actual leak test, the calculation being made by using the above-described dissolution amount of Zn. A case was assumed in which the zinc-containing paint was applied to the weld zone over a width of 50 mm, and 100,000 m³ of sea water was introduced into a 150,000 m³ LNG tank. As shown in Figure 9, even the concentration of Zn at the final drainage is about 0.08 ppm, which value being one order or more lower than the regulation value (1.5 ppm in EU and Japan). Therefore, the effluent of the leak test can be discharged without being treated.

In the above-described corrosion prevention test, the concentration of Cl in the washing water by which the test specimen immersed for 3, 24 or 30 days was washed was also analyzed. The result is shown in Figure 10.

As shown in Figure 10, for the organic zinc-rich paint and zinc primer, the removed amount of Cl is relatively stable, showing a low value. On the other hand, for the inorganic zinc-rich paint and no paint, the variation is great. It can be thought that such a result shows a tendency depending on the characteristics of paint film, and it can be thought that Cl is liable to concentrate in the white rust found in the inorganic zinc and the red rust of steel plate, and the sea water that forms relatively much rust exhibits a high removed value of Cl. Therefore, in the case where the rust is removed by water injection only, the white rust removing ability is liable to become incomplete, and it can be thought that the variation in removed amount increases. On the other hand, for the organic zinc-rich paint and zinc primer, the formation of white rust is little, and it can be thought that the Cl removing ability is relatively high.

### Slow strain rate test

To quantitatively investigate the stress corrosion cracking (SCC) behavior and the cause therefor of 9%-Ni steel, a test was carried out by the SSRT (Slow Strain Rate Test) with the SSC environment-side cause being changed. The test conditions of SSRT are given in Table 2. The test conditions were set in compliance with Hydrogen Induced Cracking (HIC) Standard TM01-77 of NACE.

**Table 2**

| Sea water | Artificial sea water (3% NaCl, ASTM-D1141-52) NACE solution (5% NaCl + 0.5% acetic acid, pH=2.75) |
|---|---|
| Atmosphere | N₂ gas atmosphere (blank condition) |
| H₂S concentration | 0-3000 ppm |
| pH | 2.7-8.5 |
| Temperature | 25±3°C |
| O₂ concentration | 0-6 ppm |
| Strain rate | 5×10⁻⁶ sec⁻¹ |

A test specimen measuring 3.8 (diameter) x 25.4 (parallel portion) x 80 (total length) (M8) was taken from a base metal whose hardness was increased by heat treatment of quenching assuming the HAZ. Regarding the heat treatment, in addition to 810 x 30 min water cooled quenching (HV363) for reproducing the proven highest hardness of about HV360 to 380 of base metal of 9%-Ni steel, 900 or 1000°C x 30 min water cooled quenching, and 810°C x 30 min water cooled quenching and subsequent 350 or 565°C x 1 hr tempering were employed (HV250 to 365). Welding was performed to weld the same materials. As the zinc-containing paint, the above-described zinc primer, organic zinc-rich paint, and inorganic zinc-rich paint were used. These paints were applied to a portion ranging from the rounded portion to the parallel portion.

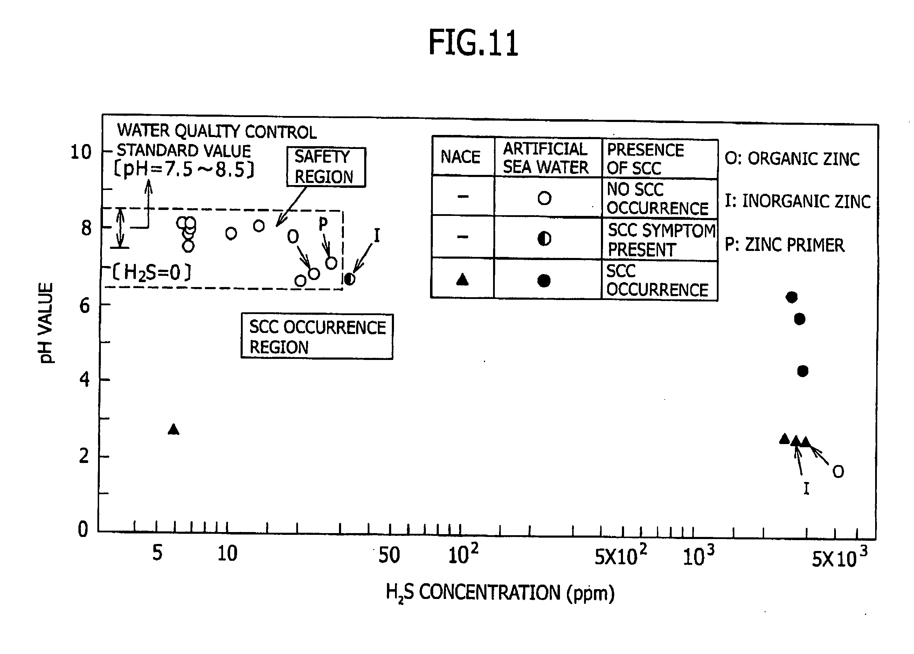

The result of the SSRT is shown in Figure 11. As shown in Figure 11, the influence of pH is strong as the cause for the occurrence of SCC, and it was found that the limit pH value is about 6.5. The NACE solution of pH 2.75 was a strong condition for accelerating SCC, and the occurrence of cracking was found. Also, the influence of H₂S was also found; if the content of H₂S was about 30 ppm or higher, the occurrence or the symptom of SCC was found. Since the pH value decreased to about 2.7 in the solution in which H₂S was dissolved in large amounts, it can be thought that H₂S exerted an influence on the occurrence of SCC compositely. The above-described tendency is a tendency unique to hydrogen induced type SCC. Therefore, it can be thought that the hardness of base metal exerted a great influence on the occurrence of SCC. In this test, all SCC occurred on the test specimen subjected to quenching showing the highest hardness of HV363 (810°C x 0.5 hr water cooled). On the other hand, even if the hardness was HV363, the occurrence of SCC was not recognized on the test specimen under the test conditions of a pH value of 6.5 or higher (upper limit: 8.5) and an H₂S concentration of 30 ppm or lower. On the quenched material of HV363 or lower, quenched/tempered material, and base metal, the occurrence of SCC was not found.

### Paint partial removal test

A corrosion prevention test was conducted by the same procedure as that of the above-described corrosion prevention test, excluding that three kinds of paint peeling portions 52 each having a length of 40 mm and a width of 1, 2 or 3 mm were provided as shown in Figure 5(b), that the immersion period was 3, 14 or 28 days, and that in the secondary exposure, the test specimen was allowed to stand for about three months under a wet condition in addition to the indoor condition. Also, a paint adhesion (crosscut method) test was conducted in compliance with JIS K5600. Table 3 gives the paint peeling results of test specimens.

**Table 3**

| Kind of paint | Test period (day) | | Welding method | Washing by water | Exposure condition | Paint peeling test result | |
|---|---|---|---|---|---|---|---|
| | Immersion | Secondary exposure | | | | Ratio | Evaluation |
| Inorganic | 28 | 90 | | Water injection | Indoor | 25/25 | Pass |
| | | | | Brushing | Wet | 2/25 | Failure |
| | | | | No washing by water | Indoor | 25/25 | Pass |
| Organic | | | | Water injection | Indoor | 0/25 | Failure |
| | | | | Brushing | Wet | 0/25 | Failure |
| | | | | No washing by water | Indoor | 0/25 | Failure |
| Primer | | | | Water injection | Indoor | 25/25 | Pass |
| | | | | Brushing | Wet | 25/25 | Pass |
| | | | | No washing by water | Indoor | 25/25 | Pass |
| Inorganic | 14 | 104 | Same material welding | Water injection | | 25/25 | Pass |
| | | | | Brushing | | 25/25 | Pass |
| Organic | | | | Water injection | | 0/25 | Failure |
| | | | | Brushing | | 0/25 | Failure |
| Primer | | | | Water injection | | 25/25 | Pass |
| | | | | Brushing | | 25/25 | Pass |
| Inorganic | 3 | 115 | | Water injection | | 7/25 | Failure |
| | | | | Brushing | | 7/25 | Failure |
| Organic | | | | Water injection | Indoor | 0/25 | Failure |
| | | | | Brushing | | 0/25 | Failure |
| Primer | | | | Water injection | | 25/25 | Pass |
| | | | | Brushing | | 25/25 | Pass |
| Inorganic | 28 | 90 | 304/9Ni | No washing by water | | 25/25 25/25 | Pass |
| Organic | | | 304/9Ni | | | 0/25 7/25 | Failure |
| Primer | | | No welding | | | 25/25 | Pass |

As shown in Table 3, for the organic zinc-rich paint, deterioration progressed during the secondary exposure, and a crack was found on the film after about three months. On the other hand, for the inorganic zinc-rich paint and zinc primer, in the case where the secondary exposure was carried out in the indoor condition, no great change is found, and the progress of rust was little. On the other hand, under a wet condition, the peeling of inorganic zinc-rich paint having immersed for 28 days was recognized, and it was found that deterioration had progressed. It was found that to prevent the deterioration of film, it is important to carry out the second exposure under a dried condition. For the zinc primer, great peeling was not found.

In this test, the performance of washing by water did not produce a large difference. The adhesion of film under a condition that the test specimen was allowed to stand after immersion was high in the order of zinc primer, inorganic zinc-rich paint, and organic zinc-rich paint. No difference was recognized between same material welding and different material welding.

### Low-temperature thermal cycle test

The test specimen having been subjected to the above-described cutter test was allowed to stand further for three months (namely, for six months after immersion), and then the test specimen was subjected to a thermal cycle test (30 cycles from RT to -196°C) using liquid N₂ to investigate the peeling and adhesion of film. The result is shown in Table 4.

**Table 4**

| Kind of paint | Test period (day) | | Welding method | Washing by water | Exposure condition | Cycles of low-temperature thermal cycle test | | | | | Adhesion test after thermal cycle test | | | |
|---|---|---|---|---|---|---|---|---|---|---|---|---|---|---|
| | Immersion | Secondary exposur | | | | 1 | 2 | 3 | 4- 29 | 30 | N/mm² | A(%) | B(%) | C(%) |
| Inorganic | | | | Water injection | Indoor | • | • | • | • | • | >4.87 | | 80 | 20 |
| | | | | Brushing | Wet | • | • | • | • | • | >3.70 | | 50 | 50 |
| | | | | No washing by water | Indoor | • | • | • | • | • | >3.78 | | 70 | 30 |
| Organic | | | | Water injection | Indoor | × | × | - | - | - | - | - | - | - |
| | 28 | 130 | | Brushing | Wet | × | - | - | - | - | - | - | - | - |
| | | | | No washing by water | Indoor | × | - | - | - | - | - | - | - | - |
| Primer | | | | Water injection | Indoor | • | • | • | • | • | >7.35 | 80 | | 20 |
| | | | Same material welding | Brushing | Wet | • | • | • | • | • | 4.99 | 100 | | |
| | | | | No washing by water | Indoor | • | • | • | • | • | 1.62 | 100 | | |
| Inorganic | | | | Water injection | | • | • | • | • | • | >1.51 | 70 | | 30 |
| | | | | Brushing | | • | • | • | • | • | >1.78 | 40 | | 60 |
| Organic | 14 | 194 | | Water injection | | • | • | • | • | • | - | - | - | - |
| | | | | Brushing | | • | • | • | • | • | - | - | - | - |
| Primer | | | | Water injection | | • | • | • | • | | >1.13 | 60 | | 40 |
| | | | | Brushing | | • | • | • | • | • | >3.61 | 40 | | 60 |
| Inorganic | | | | Water injection | | • | • | • | • | • | >0.98 | 75 | | 25 |
| | | | | Brushing | Indoor | • | • | • | • | • | 0.30 | 100 | | |
| Organic | 3 | 205 | | Water injection | | • | • | • | • | • | - | - | - | - |
| | | | | Brushing | | • | • | • | • | • | - | - | - | - |
| Primer | | | | Water injection | | • | • | • | • | • | >2.02 | 50 | - | 40 |
| | | | | Brushing | | • | • | • | • | • | 2.26 | 100 | | |
| Inorganic | | | 304/9Ni | No washing by water | | • | • | • | • | • | 0.99 | | 80 | 10 |
| Organic | 28 | 180 | 304/9Ni | | | × | - | - | - | - | - | - | - | - |
| Primer | | | No welding | | | • | • | • | • | • | 7.79 | 90 | | 10 |
| Remarks | | | | | | | | | | | A: Fracture of base metal/film interface | | | |
| | | | | | | • : No peeling of film | | | | | B: Fracture in film | | | |
| | | | | | | x: Great peeling of film | | | | | C: Fracture between adhesive and jig | | | |

As shown in Table 4, for the inorganic zinc-rich paint and zinc primer, peeling was not found, and it was verified that the paint film was not peeled even when LNG was filled. Also, in the adhesion test as well, the zinc primer exhibited a higher adhesion than the inorganic zinc-rich paint as described above.

## Claims

1. A method for carrying out a leak test of an LNG tank (10) by filling water (3), comprising the steps of:
applying a zinc-containing paint (18) or affixing a tape having a zinc-contairiing layer on a surface of a weld zone (14; 16) of an inner wall of the LNG tank;
introducing corrosive water (3) including sea water or filthy water in a state in which the zinc-containing paint or the zinc-containing layer of said tape forms the surface of the weld zone (14; 16) ;
filling the corrosive water (3) into the LNG tank (10), and discharging the corrosive water (3) from the LNG tank (10) after a predetermined period of time has elapsed; and
detecting a flaw in the inner wall of the LNG tank (10), wherein the corrosive water (3), is introduced into the LNG tank (10) so that a flow velocity of the corrosive water in the LNG tank is 3 m/s or lower locally on a surface of a bottom portion of the LNG tank.

2. The method for carrying out a leak test of an LNG tank by filling water according to Claim 1,
wherein, in the case of affixing the tape having the zinc-containing layer, the step of detecting a flaw in the inner wall of the LNG tank is carried out after the tape has been taken off from the weld zone.

3. The method for carrying out a leak test of an LNG tank by filling water according to claim 1 or 2, wherein the inner wall of the LNG tank is washed by water after the corrosive water has been discharged from the LNG tank.

4. A method of constructing an LNG tank, comprising the steps of:
applying a zinc-containing paint or affixing a tape having a zinc-containing layer to a surface of a weld zone of an inner wall of the LNG tank;
introducing corrosive water including sea water or filthy water in a state in which the zinc-containing paint forms the surface of the weld zone;
filling the corrosive water into the LNG tank, and discharging the corrosive water from the LNG tank after a predetermined period of time has elapsed; and
detecting a flaw in the inner wall of the LNG tank to carry out a leak test of the LNG tank by filling water,
wherein the corrosive water is introduced into the LNG tank so that a flow velocity of the corrosive water in the LNG tank is 3 m/s or lower locally on a surface of a bottom portion of the LNG tank.

5. The method of constructing an LNG tank according to Claim 4, wherein in the case of affixing the tape having the zinc-containing layer, the step of detecting a flaw in the inner wall of the LNG tank is carried out after the tape has been taken off from the weld zone to carry out a leak test of the LNG tank by filling water.

## Patentansprüche

1. Verfahren zum Durchführen einer Dichtigkeitsprüfung an einem LNG-Tank (10) mittels Füllwasser (3), mit den Schritten:
Aufbringen einer zinkhaltigen Farbe (18) oder Befestigen eines Bandstreifens mit einer zinkhaltigen Schicht auf einer Oberfläche einer Schweißzone (14; 16) einer Innenwand des LNG-Tanks;
Einführen von korrosivem Wasser (3), einschließlich Meerwasser oder Schmutzwasser, in einem Zustand, in welchem die zinkhaltige Farbe oder die zinkhaltige Schicht des Bandstreifens die Oberfläche der Schweißzone (14; 16) bildet;
Einfüllen des korrosiven Wassers (3) in den LNG-Tank (10) und Entfernen des korrosiven Wassers (3) aus dem LNG-Tank (10), nachdem eine vorbestimmte Zeitspanne abgelaufen ist; und
Detektieren einer Schwachstelle in der Innenwand des LNG-Tanks (10), wobei das korrosive Wasser (3) derart in den LNG-Tank (10) eingeführt wird, dass eine Fließgeschwindigkeit des korrosiven Wassers in dem LNG-Tank lokal auf einer Oberfläche eines Bodenbereichs des LNG-Tanks 3 m/s oder weniger beträgt.

2. Verfahren zum Durchführen einer Dichtigkeitsprüfung an einem LNG-Tank mittels Füllwasser nach Anspruch 1,
in welchem im Falle des Befestigens des Bandstreifens mit der zinkhaltigen Schicht der Schritt des Erfassens einer Schwachstelle in der Innenwand des LNG-Tanks durchgeführt wird, nachdem das Band von der Schweißzone abgenommen wurde.

3. Verfahren zum Durchführen einer Dichtigkeitsprüfung an einem LNG-Tank mittels Füllwasser nach Anspruch 1 oder 2, in welchem die Innenwand des LNG-Tanks mit Wasser gespült wird, nachdem das korrosive Wasser aus dem LNG-Tank entfernt worden ist.

4. Verfahren zum Konstruieren eines LNG-Tanks, umfassend die Schritte:
Aufbringen einer zinkhaltigen Farbe oder Befestigen eines Bandstreifens mit einer zinkhaltigen Schicht auf einer Oberfläche einer Schweißzone einer Innenwand des LNG-Tanks;
Einführen von korrosivem Wasser, einschließlich Meerwasser oder Schmutzwasser, in einem Zustand, in welchem die zinkhaltige Farbe die Oberfläche der Schweißzone bildet;
Einfüllen des korrosiven Wassers in den LNG-Tank und Entfernen des korrosiven Wassers aus dem LNG-Tank, nachdem eine vorbestimmte Zeitspanne abgelaufen ist; und
Detektieren einer Schwachstelle in der Innenwand des LNG-Tanks, um eine Dichtigkeitsprüfung an dem LNG-Tank mittels Füllwasser durchzuführen,
wobei das korrosive Wasser in den LNG-Tank so eingeführt wird, dass eine Fließgeschwindigkeit des korrosiven Wassers in dem LNG-Tank lokal auf einer Oberfläche eines Bodenbereichs des LNG-Tanks 3 m/s oder weniger beträgt.

5. Verfahren zum Konstruieren eines LNG-Tanks nach Anspruch 4, in welchem, im Falle des Befestigens des Bandstreifens mit der zinkhaltigen Schicht, der Schritt des Detektierens einer Schwachstelle in der Innenwand des LNG-Tanks, ausgeführt wird, nachdem der Bandstreifen von der Schweißzone abgenommen worden ist, um eine Dichtigkeitsprüfung an dem LNG-Tank mittels Füllwasser durchzuführen.

## Revendications

1. Procédé d'exécution d'un contrôle de fuite d'un réservoir de GNL (gaz naturel liquéfié) (10) par remplissage d'eau (3), comprenant les étapes :
d'application d'une peinture contenant du zinc (18) ou d'apposition d'une bande comportant une couche contenant du zinc à une surface d'une zone de soudure (14 ; 16) d'une paroi interne du réservoir de GNL ;
d'introduction d'eau corrosive (3) comprenant de l'eau de mer ou de l'eau sale dans un état dans lequel la peinture contenant du zinc ou la couche dont du zinc de ladite bande forme la surface de la zone de soudure (14 ; 16) ;
de remplissage du réservoir de GNL (10) en eau corrosive (3), et d'évacuation de l'eau corrosive (3) du réservoir de GNL (10) après qu'une période prédéterminée s'est écoulée ; et
de détection d'un défaut dans la paroi interne du réservoir de GNL (10),
dans lequel l'eau corrosive (3) est introduite dans le réservoir de GNL (10) de sorte qu'une vitesse d'écoulement de l'eau corrosive dans le réservoir de GNL est de 3 m/s ou moins localement sur une surface d'une portion inférieure du réservoir de GNL.

2. Procédé d'exécution d'un contrôle de fuite d'un réservoir de GNL par remplissage d'eau selon la revendication 1,
dans lequel, dans le cas d'une apposition de la bande comportant la couche contenant du zinc, l'étape de détection d'un défaut dans la paroi interne du réservoir de GNL est exécutée après que la bande a été retirée de la zone de soudure.

3. Procédé d'exécution d'un contrôle de fuite d'un réservoir de GNL par remplissage d'eau selon la revendication 1 ou 2, dans lequel la paroi interne du réservoir de GNL est lavée à l'eau après que l'eau corrosive a été évacuée du réservoir de GNL.

4. Procédé de construction d'un réservoir de GNL, comprenant les étapes :
d'application d'une peinture contenant du zinc ou d'apposition d'une bande comportant une couche contenant du zinc à une surface d'une zone de soudure d'une paroi interne du réservoir de GNL ;
d'introduction d'eau corrosive comprenant de l'eau de mer ou de l'eau sale dans un état dans lequel la peinture contenant du zinc forme la surface de la zone de soudure ;
de remplissage du réservoir de GNL en eau corrosive, et d'évacuation de l'eau corrosive du réservoir de GNL après qu'une période prédéterminée s'est écoulée ; et
de détection d'un défaut dans la paroi interne du réservoir de GNL afin d'exécuter un contrôle de fuite du réservoir de GNL par remplissage d'eau,
dans lequel l'eau corrosive est introduite dans le réservoir de GNL de sorte qu'une vitesse d'écoulement de l'eau corrosive dans le réservoir de GNL est de 3 m/s ou moins localement sur une surface d'une portion inférieure du réservoir de GNL.

5. Procédé de construction d'un réservoir de GNL selon la revendication 4, dans lequel, dans le cas de l'apposition de la bande comportant la couche contenant du zinc, l'étape de détection d'un défaut dans la paroi interne du réservoir de GNL est exécutée après que la bande a été retirée de la zone de soudure afin d'exécuter un contrôle de fuite du réservoir de GNL par remplissage d'eau.
